# EUROPÄISCHE PATENTSCHRIFT

(11) **EP 1 191 232 B1**
(45) Veröffentlichungstag und Bekanntmachung des Hinweises auf die Patenterteilung: **10.10.2007**
(21) Anmeldenummer: 01120238.9
(22) Anmeldetag: 23.08.2001
(51) Int. Cl.: F04D 29/58, F04D 13/06, F04D 3/00

(54) **Elektrisch angetriebene Kühlmittelpumpe**
Electric driven cooling pump
Pompe de refroidissement à entraînement électrique

(30) Priorität: 25.09.2000 DE 10047387
(43) Veröffentlichungstag der Anmeldung: 27.03.2002
(73) Patentinhaber: GPM Geräte- und Pumpenbau GmbH, 98673 Merbelsrod (Thür.) (DE)
(72) Erfinder: Pawellek, Franz, 97840 Hafenlohr (DE); Blaurock, Frank, 98553 Schleusingerneundorf (DE); Amm, Peter, 98667 Waldau (DE)
(74) Vertreter: Kuhnen & Wacker

(56) Entgegenhaltungen:
- EP-A- 0 987 441
- WO-A-97/32131
- US-A- 2 506 827
- US-A- 2 554 191
- US-A- 3 826 595
- US-A- 4 213 745

## Beschreibung

Die Erfindung betrifft eine elektrisch angetriebene Kühlmittelpumpe nach dem Oberbegriff des Anspruches 1.

Elektrisch angetriebene Kühlmittelpumpen werden zunehmend als Antriebselement für den Kühlwasserkreislauf eines Verbrennungsmotors in einem Kraftfahrzeug angewendet. Diese haben gegenüber einer an die Motordrehzahl gekoppelten Pumpe herkömmlicher Bauart den Vorteil, daß sie unabhängig von der Motordrehzahl und somit auch beispielsweise im Stillstand Kühlwasser fördern können. Ein Beispiel für eine derartige Kühlmittelpumpe ist in der DE 296 18 558 U1 beschrieben. Diese Pumpe ist als Kreiselpumpe ausgebildet, mittels der das in Axialrichtung eintretende Kühlmittel radial in einen spiralförmigen Auslaßkanal umgelenkt und zurück in den Verbrennungsmotor gefördert wird. Als Antrieb für das Laufrad der Kreiselpumpe dient ein hier an den Verbrennungsmotor angeflanschter Elektromotor, der einen Stator und einen darin auf einer Hohlwelle gelagerten Rotor aufweist. Zwischen dem Rotor und dem Stator befindet sich ein Spalttopf, der von Kühlwasser umgeben ist. Dabei befindet sich der Elektromotor bzw. Spalttopf abseits der Strömungsrichtung des Kühlmittels.

Diese Bauweise einer Kühlmittelpumpe weist jedoch Nachteile auf: So ist die maximale Drehzahl von derartigen Naßläuferpumpen üblicherweise auf ca. 4500 U/min begrenzt, um die Leistungsverluste insbesondere aufgrund der mit der Drehzahl stark ansteigenden Pantschverluste noch relativ gering halten zu können.

Um dennoch die gewünschte Leistung bereitstellen zu können, werden diese bekannten elektrischen Kühlmittelpumpen daher entsprechend groß dimensioniert. Zudem erfordert diese Kühlmittelpumpe bereits aufgrund der Bauweise mit einem radial wirkenden Laufrad im erheblichen Maße Bauraum, damit das Kühlmittel in gewünschter Weise umgelenkt werden kann und hierbei keine zu großen Reibungsverluste auftreten. Die für einen Einbau einer derartigen Kühlmittelpumpe geeigneten Stellen sind folglich insbesondere im Motorraum eines Kraftfahrzeuges sehr begrenzt. Gerade auch bei einer derartigen Anwendung wird zudem das relativ hohe Gewicht dieser Bauart als nachteilig empfunden, da sich hier jede zusätzliche Gewichtseinheit negativ auf den Verbrauch des Verbrennungsmotors auswirkt. Herkömmlich ist beispielsweise ein spezifisches Leistungsgewicht von ca. 1,1 kg/100 Watt gegeben.

Weitere Naßläuferpumpen sind beispielsweise aus der US 3,826,595 und der US 2,554,191 bekannt. Auch die EP 0 987 441 A1 beschreibt eine Naßläuferpumpe. Diese ist mit einem radialen Laufrad in Inlineausführung ausgestaltet.

Die WO 97/32 131 beschreibt eine elektrisch angetriebene Kühlmittelpumpe für den Kühlwasserkreislauf eines Verbrennungsmotos in einem Kraftfahrzeug, wobei ein flüssiges Kühlmittel in einem geschlossenen Kühlkreislauf an den zu kühlenden Flächen entlang geführt wird. Dabei weist diese bekannte Kühlmittelpumpe einen Elektromotor mit einem umlaufenden, vom Elektromotor angetriebenen Pumpenrad zur Einbringung von kinetischer Energie in das flüssige Kühlmittel auf, wobei das Pumpenrad in einem Pumpengehäuse mit Strömungseinlaßöffnung und Strömungsauslaßöffnung angeordnet ist, und wobei das Pumpenrad ein Axialpumpenrad ist. Ferner ist das Pumpengehäuse hierbei langgestreckt ausgebildet und umschließt einlaßseitig das Pumpenrad sowie in Strömungsrichtung anschließend den Elektromotor. Dieser ist gegenüber dem Kühlmittel gekapselt und ein Trockenläufer. Im Bereich der Strömungseinlaßöffnung sind zudem Schwenkflügel angeordnet, mittels welchen der Strömungsquerschnitt des Kühlmittels gezielt variiert wird, um konstante Drehzahlen des Elektromotors zu ermöglichen. Ferner ist das Pumpengehäuse doppelwandig ausgebildet und stellt somit einen weitestgehend ringförmigen Strömungskanal für das Kühlmittel innerhalb der Wandung des Pumpengehäuses bereit. Der Elektromotor bei dieser bekannten Kühlmittelpumpe wird mit Drehzahlen über 10.000 U/min betrieben. Die vorliegende Erfindung geht von diesem Stand der Technik aus.

Der Erfindung liegt daher die Aufgabe zugrunde, eine Kühlmittelpumpe gemäß dem Oberbegriff des Anspruches 1 derart weiterzubilden, daß sie bei einem geringen Gewicht und einem geringen Bauraumbedarf eine große Freizügigkeit hinsichtlich des Einbauortes ermöglicht.

Diese Aufgabe wird durch eine elektrisch angetriebene Kühlmittelpumpe mit den Merkmalen des Anspruches 1 gelöst.

So ist erfindungsgemäß insbesondere vorgesehen, daß das Pumpengehäuse langgestreckt ausgebildet ist und einlaßseitig das Pumpenrad sowie in Strömungsrichtung anschließend den Elektromotor umschließt, wobei zwischen dem Pumpengehäuse und der Außenseite des Elektromotors ein ringförmiger Strömungskanal für das Kühlmittel angeordnet ist, und wobei der Elektromotor gegenüber dem Kühlmittel gekapselt ist. Dies hat den wesentlichen Vorteil, daß auch der Elektromotor vom Kühlmittel überströmt wird und infolge der großen wärmeaustauschenden Fläche eine sehr effektive Kühlung des Elektromotors möglich ist. Dabei ist der Elektromotor über wenigstens einen Steg im Pumpengehäuse gehalten, so daß er angesteuert werden kann.

Insbesondere wurde erfindungsgemäß erkannt, daß die Verluste einer Pumpe üblicherweise mit der fünften Potenz des Raddurchmessers steigen. Gleichzeitig steigen die Verlust jedoch nur mit der dritten Potenz der Drehzahl, weshalb die erfindungsgemäße Elektropumpe so ausgelegt ist, daß sie ihre Leistung vorwiegend aus der Drehzahl bezieht, d.h. höhere Drehzahlen als der Stand der Technik anstrebt.

Im Gegensatz zum Stand der Technik, bei dem die theoretisch maximale Drehzahl der angewendeten Pumpen aus den genannten Gründen nicht ausgeschöpft wird, kann erfindungsgemäß das gesamte Leistungsspektrum des Elektromotors durch die Anordnung in der Strömung des Kühlmittels ausgenutzt werden. Waren im Stand der Technik noch maximale Drehzahlen von ca. 4500 U/min möglich, so sind mit der erfindungsgemäßen Elektropumpe erstmals auch Drehzahlen von über 12000 U/min und insbesondere 15000 U/min erzielbar.

Die erfindungsgemäß erzielte ständige Wasserkühlung des Spulenmantels des Elektromotors und somit die Abführung der Verlustwärme des Elektromotors durch den stetigen Fluß des Kühlmediums über den Außenmantel des Motors erlaubt es, einen optimierten Nutzungsgrad zu erzielen. Daher können mit einem relativ klein gebauten Motor sehr hohe Leistungen erzielt werden.

Dieser erhöhte Wirkungsgrad gegenüber dem Stand der Technik bewirkt zudem eine drastische Verbesserung des spezifischen Leistungsgewichts auf z.B. ca. 350 g/100 Watt, was sich besonders vorteilhaft hinsichtlich des Gewichts der Anordnung auswirkt.

Gleichzeitig kann der Elektromotor wie auch eine eventuell zugehörige Steuerelektronik sehr kostengünstig bereit gestellt werden.

Dadurch, daß das Pumpenrad ein Axial pumpenrad ist, sind besonders hohe Drehzahlen möglich, so daß die tatsächliche Leistungsfähigkeit des von durchströmenden Kühlmittel gekühlten Elektromotors besonders gut ausgenutzt werden kann.

Aufgrund der hohen möglichen Drehzahlen ist es zudem auch möglich, den Durchmesser des Pumpenrades gering zu halten, wodurch sich die hieraus ergebenen Verluste reduzieren lassen. Gleichzeitig ermöglicht dies auch eine wesentlich geringere Baugröße der erfindungsgemäßen Kühlmittelpumpe gegenüber dem Stand der Technik, was die Einbaumöglichkeiten in einem Motorraum etc. erweitert. Da die erfindungsgemäße Pumpe zudem als sogenannte "Inlinepumpe" konzipiert ist, läßt sie sich besonders gut in Kühlkreisläufe integrieren und ist außerordentlich universell einsetzbar.

Hierbei sind zwar ebenfalls in Gestalt von Inlinepumpen" ausgebildete Kraftstofförderpumpen aus dem Kraftfahrzeugbereich bekannt. Bei diesen fließt der Kraftstoff jedoch durch den Magnetspalt über den Kollektor des Elektromotors hinweg, d.h. es handelt sich um Naßläuferpumpen. Die maximale Drehzahl des Elektromotors ist bei derartigen Kraftstofförderpumpen begrenzt, da die Pantschverluste bei höheren Drehzahlen stark ansteigen. Diese bekannten Kraftstofförderpumpen sind hierbei darauf hin konzipiert, bei relativ kleinen Drehzahlen den Kraftstoff mit hohen Drücken zu beaufschlagen. Ein Trockenläufermotor kommt hier nicht in Betracht, da evtl. Leckagen in den heißen Läuferraum zur Explosion führen können.

Demgegenüber sieht die vorliegende Erfindung die Bereitstellung einer Kühlmittelpumpe vor, mittels der große Durchflußmengen bei hohen Drehzahlen gefördert werden, was mit den bekannten Kraftstofförderpumpen nicht möglich ist.

Vorteilhafte Weiterbildungen der Erfindung ergeben sich aus den Merkmalen der Unteranprüche.

So kann sich an den Elektromotor in Strömungsrichtung eine elektronische Steuereinheit anschließen, welche den Elektromotor ansteuert. Damit ist es vorteilhafterweise möglich, neben einer sehr kompakten Bauweise auch eine ständige Kühlung der elektronischen Steuereinheit durch das vorbeiströmende Kühlmittel zu erzielen. Die Leistungsfähigkeit der erfindungsgemäßen Kühlmittelpumpe läßt sich daher weiter erhöhen, wobei sich der erforderliche Bauraum verringert.

Zudem ist es auch möglich, daß die elektronische Steuereinheit ein Trägerelement aus Metall aufweist, mittels dessen besonders guter Wärmeleitfähigkeit ein guter Abtransport der von den elektronischen Bauteilen erzeugten Wärmeenergie in das Kühlmittel möglich ist.

Wenn der Außendurchmesser des Pumpenrades im wesentlichen dem Innendurchmesser eines Zulaufs zum Pumpengehäuse entspricht, läßt sich ein kleinstmöglicher Laufraddurchmesser erzielen. Hierbei wird in besonders vorteilhafter Weise Nutzen aus den hohen Drehzahlen des Pumpenrades gezogen, wodurch auch bei derartig kleinen Strömungsquerschnitten hohe Fördermengen ermöglicht werden. Gleichzeitig läßt sich so eine äußerst geringe Baugröße für die erfindungsgemäße Kühlmittelpumpe erzielen.

Von weiterem Vorteil ist es, wenn die Strömungsquerschnittsfläche des ringförmigen Strömungskanals um den Elektromotor auf die Durchlaßquerschnittsfläche der Strömungseinlaßöffnung angepaßt ist, da so Reibungs- bzw. Druckverluste innerhalb der Kühlmittelpumpe auf ein Minimum gehalten werden können. Damit läßt sich ein noch besserer Wirkungsgrad der Anordnung erzielen.

Wenn die erste Lagerstelle einer das Pumpenrad tragenden Welle benachbart dem Pumpenrad angeordnet ist, kann dieses insbesondere angesichts der hohen Drehzahlen besonders gut gelagert werden, so daß die dynamischen Belastungen am Pumpenrad gering sind. Zudem kann die erste Lagerstelle daher auch mit relativ geringen Abmessungen ausgebildet werden, was Reibverluste verringert und den Wirkungsgrad der Kühlmittelpumpe insgesamt erhöht.

Hierbei kann die erste Lagerstelle insbesondere als Gleitlager ausgebildet sein, was auch bei einer Anordnung dieser Lagerstelle im Kühlmittel zu einer sehr zuverlässigen und dauerhaften Lagerung führt.

Alternativ ist es auch möglich, daß die erste Lagerstelle als Wälzlager ausgebildet ist, wodurch sich eine besonders geringe Reibung an dieser Lagerstelle erzielen läßt. Eine Abdichtung dieses Wälzlagers gegenüber dem Kühlmittel kann hierbei beispielsweise mit einem Wellendichtring oder dgl. erfolgen.

Von besonderem Vorteil ist es, wenn die erste Lagerstelle einen geometrischen Bezug zum Laufradgehäuse hat. Durch die mögliche Bearbeitung von Lagerdurchmesser und Gehäusedurchmesser in einer Aufspannung kann ein minimaler Laufspalt am Flügelradaußendurchmesser von beispielsweise ca. 0,02 mm eingestellt werden.

Weiter kann eine zweite Lagerstelle einer das Pumpenrad tragenden Welle am Elektromotor angeordnet sein, wodurch sich neben einer kompakten Bauweise eine zuverlässige Abstützung der dynamischen Belastungen durch das Pumpenrad erzielen läßt.

Hierbei kann die zweite Lagerstelle als Wälzlager ausgebildet und gegenüber dem Kühlmittel gekapselt sein, wodurch die Lagerung auch bei den angestrebten hohen Drehzahlen besonders zuverlässig ist und geringe Reibungsverluste erzielbar sind. Zudem ist durch die Kapselung der Lagerstelle gegenüber dem Kühlmittel auch eine Beeinträchtigung durch dieses wirksam unterbunden, was sich positiv auf die Lebensdauer der Lagerstelle auswirkt. Als Wälzlager kann hierbei insbesondere ein Rillenkugellager verwendet werden, welches auch zur Aufnahme von Axialkräften geeignet ist.

Von weiterem Vorteil ist es, wenn die zweite Lagerstelle mittels einem Wellendichtring gegenüber dem Kühlmittel gekapselt ist. Derartige Wellendichtringe haben sich in der Praxis vielfach auch bei hohen Drehzahlen als sehr zuverlässig erwiesen. Somit kann auf bewährte und kostengünstige Maßnahmen zur Kapselung der zweiten Lagerstelle zurückgegriffen werden.

Ferner kann die Welle zweiteilig ausgebildet sein und einen korrosionsfreien Nadelstift und einen Wellenabschnitt aufweisen, wobei der Nadelstift als Gegenlaufpartner für den Wellendichtring dient und in den Wellenabschnitt eingepreßt ist, und wobei der Nadelstift aus einem Material besteht, welches härter als das Material des Wellenabschnitts ist. Durch die Kombination eines harten Materials für den Nadelstift und eines weicheren Materials für den Wellenabschnitt läßt sich eine zuverlässige und dauerhafte Verbindung dieser Elemente der Welle herstellen. Zudem können die Materialeigenschaften am jeweiligen Wellenabschnitt individuell auf den jeweiligen Gegenlaufpartner abgestimmt werden. Hierdurch lassen sich die Zuverlässigkeit und Funktionalität der erfindungsgemäßen Kühlmittelpumpe weiter verbessern.

Wenn der wenigstens eine Steg aus einem elastomeren Kunststoff ausgebildet ist, kann eine akustische Entkopplung des Elektromotors von dem Pumpengehäuse erzielt werden, was zur Geräuschdämpfung beiträgt. Gleichzeitig wird auch eine verbesserte thermische Isolation gegenüber dem Pumpengehäuse erzielt.

Zudem kann die Baugruppe Elektromotor-Pumpenrad auch über mehrere am Umfang verteilte Stege im Pumpengehäuse gehalten sein, so daß sich eine sehr zuverlässige und kompakte Bauweise für die Kühlmittelpumpe ergibt.

Von weiterem Vorteil ist es, wenn das Pumpenrad aus einem flexiblen und schlagzähen Kunststoff ausgebildet ist, da somit ein elastisches. Ausweichen des Pumpenrades ermöglicht wird, wenn Partikel im Pumpenradspalt vorliegen sollten. Hierdurch kann ein Blockieren des Pumpenrades noch zuverlässiger vermieden werden. In praktischen Versuchen hat sich z.B. PEEK als besonders geeignetes Material erwiesen.

Alternativ oder ergänzend kann auch der das Pumpenrad umschließende Zulauf zum Pumpengehäuse aus einem Kunststoff ausgebildet sein, der in der Lage ist, Partikel einzubetten und somit ein Blockieren des Pumpenrades zu verhindern. Hierfür wird vorzugsweise ein relativ weicher Kunststoff verwendet, so daß die Partikel in diesen ausweichen können und es nicht zu einer Beschädigung des Pumpenrades kommt.

Die Erfindung wird nachfolgend in Ausführungsbeispielen anhand einer Figur der Zeichnung näher erläutert. Diese zeigt einen Längsschnitt durch eine erfindungsgemäße Kühlmittelpumpe.

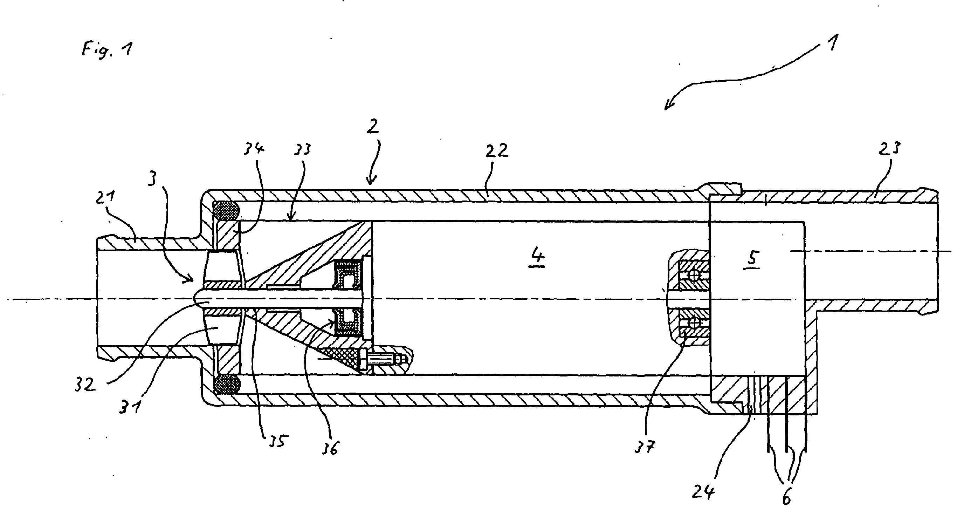

Gemäß der Darstellung in Fig. 1 weist eine elektrisch angetriebene Kühlmittelpumpe 1 ein langgestreckt ausgebildetes Pumpengehäuse 2 auf, welches eine Pumpenradanordnung 3, einen Elektromotor 4 und eine elektronische Steuereinheit 5 umschließt.

Das Pumpengehäuse 2 weist eine Strömungseinlaßöffnung 21, einen Mittelabschnitt 22 und eine Strömungsauslaßöffnung 23 auf. Hierbei wird die Kühlmittelpumpe 1 in dieser Ausführungsform in einen geschlossenen Kühlkreislauf eines Kraftfahrzeuges eingesetzt, wobei die Strömungseinlaßöffnung 21 mit einem hier nicht dargestellten Zulauf in Gestalt eines Schlauches oder dergleichen und die Strömungsauslaßöffnung 23 mit einem ebenfalls hier nicht dargestellten Ablauf z.B. in Gestalt eines Schlauches etc. gekoppelt ist. Das Kühlmittel durchströmt im Einsatz das Pumpengehäuse 2 von der Strömungseinlaßöffnung 21 in Richtung zur Strömungsauslaßöffnung 23. Hierbei sind die Pumpenradanordnung 3, der Elektromotor 4 und die elektronische Steuereinheit 5 gemäß der Darstellung in Fig. 1 in Strömungsrichtung des Kühlmittels aneinander anschließend innerhalb des Pumpengehäuses 2 angeordnet.

Die Pumpenradanordnung 3 enthält ein Pumpenrad 31, welches als Axialpumpenrad ausgebildet und auf einer Welle 32 gelagert ist. Diese durchgreift zunächst eine an den Elektromotor 4 angekoppelte Lagerhalterung 33 und weiter den Elektromotor 4 selbst bis hin zu dem der elektronischen Steuereinheit 5 zugewandten Ende. Die Lagerhalterung 33 ist hier mit dem Gehäuse des Elektromotors 4 verschraubt, wobei die Schraubenlöcher in der dargestellten Weise ausgefüllt sind, um Verwirbelungen im Kühlmittelstrom zu vermeiden.

Das Pumpenrad 31 weist einen Außendurchmesser auf, der im wesentlichen dem Innendurchmesser der Strömungseinlaßöffnung 21 bzw. dem Innendurchmesser eines Ringabschnitts 34 der Lagerhalterung 33 entspricht, so daß das Pumpenrad 31 mit geringem Spiel drehend innerhalb der Strömungseinlaßöffnung 21 bzw. im Ringabschnitt 34 bewegt werden kann. Im vorliegenden Beispiel weist die Strömungseinlaßöffnung 21 einen Durchmesser von 25 mm auf. Dieses Maß entspricht auch im wesentlichen dem Innendurchmesser des hier nicht dargestellten Zulaufschlauchs.

Die Welle 32 ist benachbart dem Pumpenrad 31 in einem Gleitlagerabschnitt bzw. Gleitlager 35 an der Lagerhalterung 33 gelagert. Das Gleitlager 35 kann dabei aus einem Kohlefaserwerkstoff wie z.B. PEEK ausgebildet sein. Zwischen dem Gleitlager 35 und dem Eintritt der Welle 32 in den Elektromotor 4 ist ferner ein Wellendichtring 36 angeordnet, mittels dem der Innenraum des Elektromotors 4 gegenüber dem Kühlmittel gekapselt ist. Der Wellendichtring 36 ist in der vorliegenden Ausführungsform als Doppelmembrandichtung ausgebildet, dessen Zwischenraum mit Fett gefüllt ist. An dem vom Pumpenrad 31 fernen Ende der Welle 32 ist ferner ein Wälzlager 37 innerhalb des Elektromotors 4 angeordnet, welches hier als Rillenkugellager ausgebildet ist.

Der Elektromotor 4 und die hieran angekoppelte elektronische Steuereinheit 5 sind ferner über drei gleichmäßig am Umfang verteilte und hier nicht im einzelnen dargestellte Stege im Pumpengehäuse 2 gehalten. Die Stege sind aus einem Elastomer ausgebildet. Wie in Fig. 1 angedeutet ist, weist das Pumpengehäuse 2 ferner eine Öffnung 24 zur Atmosphäre auf, mittels der der Läuferraum des Elektromotors 4 belüftet ist. Ferner sind in der Wandung des Pumpengehäuses 2 Versorgungspins 6 angeordnet, welche eine Ansteuerung der elektronischen Steuereinheit 5 ermöglichen. Die Anzahl der Versorgungspins 6 hängt hierbei von der Art der elektronischen Steuereinheit 5 ab.

Der Elektromotor 4 ist hier als bürstenloser Gleichstrommotor mit elektronischer Kommutierung ausgebildet. Er ist gegenüber das ihn umströmende Kühlmittel gekapselt und somit ein Trockenläufer.

Die Querschnittsflächen der Strömungseinlaßöffnung 21 im Verhältnis zur wirksamen Durchströmungsfläche im ringförmigen Strömungskanal zwischen dem Elektromotor 4 und der Innenwandung des Pumpengehäuses 2 im Mittelabschnitt 22, sowie zur wirksamen Querschnittsfläche der Strömungsauslaßöffnung 23 ist so angepaßt, daß Reibungsverluste vermieden werden. Hierbei weist die Strömungsauslaßöffnung 23 üblicherweise den gleichen Durchmesser wie die Strömungseinlaßöffnung 21 auf, was jedoch nicht zwingend der Fall sein muß.

Im Einsatz wird der Elektromotor 4 derart durch die elektronische Steuereinheit 5 angesteuert, daß er die gewünschte Drehzahl bzw. das gewünschte Drehmoment bereitstellt, damit das Pumpenrad 31 die gewünschte Fördermenge an Kühlmittel erzielt. Hierbei wird das Kühlmittel über die Strömungseinlaßöffnung 21 eingezogen, durch das Pumpenrad 31 weiter gefördert und überströmt den Spaltbereich zwischen dem Außenumfang des Elektromotors 4 bzw. der elektronischen Steuereinheit 5 und den Innendurchmesser des Pumpengehäuses 2, wodurch diese Komponenten gleichzeitig gekühlt werden. Das Kühlmittel wird schließlich durch die Strömungsauslaßöffnung 23 abgeführt und dem Verbrennungsmotor zugeleitet.

Die Erfindung läßt neben der erläuterten Ausführungsform weitere Gestaltungsansätze zu.

So kann anstelle des Axialpumpenrades auch ein Halbaxialpumpenrad zur Anwendung kommen.

Ferner kann der Innendurchmesser der Strömungseinlaßöffnung 21 wie auch der des ringförmigen Strömungskanals um den Elektromotor 4 und der Durchmesser der Strömungsauslaßöffnung 23 in Abhängigkeit von den jeweiligen Gegebenheiten variiert werden.

Der Wellendichtring kann auch zwischen dem Gleitlager 35 und dem Pumpenrad 31 angeordnet werden, so daß das Gleitlager 35 ebenfalls im Trockenen ist. Anstelle des Wellendichtrings kann auch eine andere Dichtungseinrichtung treten. Hierbei ist es auch möglich, anstelle eines Gleitlagers ein Wälzlager anzuwenden. Erfindungsgemäß soll hierbei der Durchmesser der Lagerungen und des Wellendichtringes jedoch weiter klein gehalten werden, so daß Reibverluste minimiert werden.

Die elektronische Steuereinheit kann auch ein Trägerelement aus Metall aufweisen, mittels dem die Abwärme der elektronischen Bauteile besser dem Kühlmittel zugeführt wird.

Die erfindungsgemäße Kühlmittelpumpe 1 kann zudem auch in anderen Anwendungsfällen als für einen Verbrennungsmotor eingesetzt werden. So ist beispielsweise auch ein Einsatz bei Brennstoffzellenantrieben etc. möglich.

Zudem kann die Kühlmittelpumpe 1 nahezu an jeder Stelle innerhalb des Kühlmittelkreislaufes angeordnet werden, so daß kaum Beschränkungen hinsichtlich der Einbauorte gegeben sind. Dabei ist es beispielsweise auch möglich, die Kühlmittelpumpe innerhalb anderer Komponenten in einem Motorraum wie z.B. innerhalb einer Ölwanne anzuordnen, solange die entsprechenden Anschlüsse für den Kühlmittelkreislauf angefügt werden können.

Die Erfindung schafft somit eine elektrisch angetriebene Kühlmittelpumpe 1, die insbesondere für eine Brennkraftmaschine geeignet ist, und bei der ein Kühlmittel, das insbesondere auf Wasser basiert, in einem geschlossenen Kühlkreislauf an den zu kühlenden Flächen entlang geführt wird. Hierbei enthält die Kühlmittelpumpe 1 ein Pumpengehäuse 2, welches langgestreckt ausgebildet ist und das einlaßseitig ein Pumpenrad 31 sowie in Strömungsrichtung anschließend einen Elektromotor 4 umschließt, wobei zwischen dem Pumpengehäuse 2 und der Außenseite des Elektromotors 4 ein ringförmiger Strömungskanal für das Kühlmittel ausgebildet ist. Hierbei ist der Elektromotor 4 gegenüber dem Kühlmittel gekapselt und die Baugruppe Elektromotor-Pumpenrad ist im axialen Bereich des Elektromotors 4 über wenigstens einen Steg im Pumpengehäuse 2 gehalten, durch den hindurch auch die Anschlüsse 6 für den Elektromotor 4 geführt sind. Die Kühlmittelpumpe 1 kann daher aufgrund der somit erzielten ständigen Kühlung des Elektromotors durch das vorbeiströmende Kühlmittel mit sehr hohen Drehzahlen betrieben werden, wodurch sich eine geringe Baugröße und gleichzeitig ein geringes Gewicht der Anordnung realisieren läßt. Daher ist in weitem Maße eine Variation des Einbauortes der erfindungsgemäßen Kühlmittelpumpe 1 möglich.

## Patentansprüche

1. Elektrisch angetriebene Kühlmittelpumpe (1) für den Kühlwasserkreislauf eines Verbrennungsmotors in einem Kraftfahrzeug, wobei ein flüssiges Kühlmittel, insbesondere auf der Basis von Wasser, in einem geschlossenen Kühlkreislauf an den zu kühlenden Flächen entlang geführt wird,
mit einem Elektromotor (4) und einem umlaufenden, vom Elektromotor (4) angetriebenen Pumpenrad (31) zur Einbringung von kinetischer Energie in das flüssige Kühlmittel, wobei das Pumpenrad (31) in einem Pumpengehäuse (2) mit Strömungseinlaßöffnung (21) und Strömungsauslaßöffnung (23) angeordnet ist, und wobei das Pumpenrad (31) ein Axialpumpenrad ist,
wobei das Pumpengehäuse (2) langgestreckt ausgebildet ist und einlaßseitig das Pumpenrad (31) sowie in Strömungsrichtung anschließend den Elektromotor (4) umschließt,
wobei der Elektromotor (4) gegenüber dem Kühlmittel gekapselt und ein Trockenläufer ist,
wobei der Elektromotor (4) mit Drehzahlen von über 12.000 U/min läuft, und
wobei die Kühlmittelpumpe (1) einen weitestgehend ringförmigen Strömungskanal für das Kühlmittel aufweist,
**dadurch gekennzeichnet,**
**daß** das Kühlmittel auch der Kühlung des Elektromotors (4) dient,
**daß** der Strömungskanal für das Kühlmittel zwischen dem Pumpengehäuse (2) und der Außenseite des Elektromotors (4) angeordnet ist, und
**daß** die Baugruppe Elektromotor-Pumpenrad im Bereich des Elektromotors (4) über wenigstens einen axial am Umfang angeordneten Steg im Pumpengehäuse (2) gehalten ist, durch den hindurch auch die Anschlüsse (6) für die Ansteuerung des Elektromotors (4) geführt sind.

2. Kühlmittelpumpe nach Anspruch 1, **dadurch gekennzeichnet, daß** sich an den Elektromotor (4) in Strömungsrichtung eine elektronische Steuereinheit (5) anschließt.

3. Kühlmittelpumpe nach Anspruch 2, **dadurch gekennzeichnet, daß** die elektronische Steuereinheit (5) ein Trägerelement aus Metall aufweist.

4. Kühlmittelpumpe nach einem der Ansprüche 1 bis 3, **dadurch gekennzeichnet, daß** der Außendurchmesser des Pumpenrades (31) im wesentlichen dem Innendurchmesser eines Zulaufs zum Pumpengehäuse (2) entspricht.

5. Kühlmittelpumpe nach Anspruch 4, **dadurch gekennzeichnet, daß** die Strömungsquerschnittsfläche des ringförmigen Strömungskanals um den Elektromotor (4) auf die Durchlaßquerschnittsfläche der Strömungseinlaßöffnung (21) angepaßt ist.

6. Kühlmittelpumpe nach einem der Ansprüche 1 bis 5, **dadurch gekennzeichnet, daß** eine erste Lagerstelle einer das Pumpenrad (31) tragenden Welle (32) benachbart dem Pumpenrad (31) angeordnet ist.

7. Kühlmittelpumpe nach Anspruch 6, **dadurch gekennzeichnet, daß** die erste Lagerstelle als Gleitlager (35) ausgebildet ist.

8. Kühlmittelpumpe nach Anspruch 6, **dadurch gekennzeichnet, daß** die erste Lagerstelle als Wälzlager ausgebildet ist.

9. Kühlmittelpumpe nach einem der Ansprüche 1 bis 8, **dadurch gekennzeichnet, daß** eine zweite Lagerstelle einer das Pumpenrad (31) tragenden Welle (32) am Elektromotor (4) angeordnet ist.

10. Kühlmittelpumpe nach Anspruch 9, **dadurch gekennzeichnet, daß** die zweite Lagerstelle als Wälzlager (37), insbesondere als Rillenkugellager mit Axialkraftaufnahme, ausgebildet und gegenüber dem Kühlmittel gekapselt ist.

11. Kühlmittelpumpe nach Anspruch 9 oder 10, **dadurch gekennzeichnet, daß** die zweite Lagerstelle mittels einem Wellendichtring (36) gegenüber dem Kühlmittel gekapselt ist.

12. Kühlmittelpumpe nach Anspruch 11, **dadurch gekennzeichnet, daß** die Welle zweiteilig ausgebildet ist und einen korrosionsfreien Nadelstift sowie einen Wellenabschnitt aufweist, wobei der Nadelstift als Gegenlaufpartner für den Wellendichtring (36) dient und in den Wellenabschnitt eingepreßt ist, und wobei der Nadelstift aus einem Material besteht, welches härter als das Material des Wellenabschnitts ist.

13. Kühlmittelpumpe nach einem der Ansprüche 1 bis 12, **dadurch gekennzeichnet, daß** der wenigstens eine Steg aus einem elastomeren Kunststoff ausgebildet ist.

14. Kühlmittelpumpe nach einem der Ansprüche 1 bis 13, **dadurch gekennzeichnet, daß** die Baugruppe Elektromotor-Pumpenrad über mehrere am Umfang verteilte Stege im Pumpengehäuse (2) gehalten ist.

15. Kühlmittelpumpe nach einem der Ansprüche 1 bis 14, **dadurch gekennzeichnet, daß** das Pumpenrad (31) aus einem flexiblen und schlagzähen Kunststoff, beispielsweise PEEK, ausgebildet ist.

16. Kühlmittelpumpe nach einem der Ansprüche 4 bis 15, **dadurch gekennzeichnet, daß** der das Pumpenrad (31) umschließende Zulauf zum Pumpengehäuse (2) aus einem Kunststoff ausgebildet ist, der in der Lage ist, Partikel einzubetten und somit ein Blockieren des Pumpenrads (31) zu verhindern.

## Claims

1. An electrically powered coolant pump (1) for the cooling water circuit of an internal combustion engine in an automotive vehicle, wherein a liquid coolant, in particular a water-based one, is guided in a closed cooling circuit along the surfaces to be cooled,
including an electric motor (4) and a rotational pump wheel (31) driven by said electric motor (4) for introducing kinetic energy into the liquid coolant, wherein said pump wheel (31) is arranged in a pump housing (2) having a flow inlet opening (21) and a flow outlet opening (23), and wherein said pump wheel (31) is an axial pump wheel,
wherein said pump housing (2) has an elongate shape and on the inlet side encloses said pump wheel (31) and subsequently downstream therefrom encloses said electric motor (4),
wherein said electric motor (4) is encapsulated against the coolant and runs dry,
wherein said electric motor (4) runs at rotational speeds of more than 12,000 rpm, and
wherein the coolant pump (1) has an essentially annular flow passage for the coolant,
**characterized in that**
the coolant moreover serves for cooling said electric motor (4),
said flow passage for the coolant is arranged between said pump housing (2) and the outside of said electric motor (4), and
the structural component of electric motor and pump wheel is retained in the range of said electric motor (4) with the aid of at least one web positioned axial at the circumference in said pump housing (2), through which web moreover the connections (6) for driving said electric motor (4) are routed.

2. The coolant pump in accordance with claim 1, **characterized in that** said electric motor (4) is followed by an electronic control unit (5) in the direction of flow.

3. The coolant pump in accordance with claim 2, **characterized in that** said electronic control unit (5) includes a metallic support member.

4. The coolant pump in accordance with any one of claims 1 to 3, **characterized in that** the external diameter of said pump wheel (31) substantially corresponds to the internal diameter of a supply conduit to said pump housing (2).

5. The coolant pump in accordance with claim 4, **characterized in that** the cross-sectional area of flow of the annular flow passage around said electric motor (4) is adapted to the cross-sectional area of opening of said flow inlet opening (21).

6. The coolant pump in accordance with any one of claims 1 to 5, **characterized in that** a first bearing of a shaft (32) supporting said pump wheel (31) is arranged in the vicinity of said pump wheel (31).

7. The coolant pump in accordance with claim 6, **characterized in that** said first bearing has the form of a slide bearing (35).

8. The coolant pump in accordance with claim 6, **characterized in that** said first bearing has the form of a rolling bearing.

9. The coolant pump in accordance with any one of claims 1 to 8, **characterized in that** a second bearing of a shaft (32) supporting said pump wheel (31) is arranged at said electric motor (4).

10. The coolant pump in accordance with claim 9, **characterized in that** said second bearing has the form of a rolling bearing (37), in particular a deep groove ball bearing for receiving axial forces, and is encapsulated against the coolant.

11. The coolant pump in accordance with claim 9 or 10, **characterized in that** said second bearing is encapsulated against the coolant by means of a shaft seal ring (36).

12. The coolant pump in accordance with claim 11, **characterized in that** said shaft is formed in two parts and comprises a corrosion-proof needle pin as well as a shaft portion, wherein said needle pin serves as a sliding partner for said shaft seal ring (36) and is press-fitted into said shaft portion, and wherein said the needle pin consists of a material that has a higher hardness than the material of said shaft portion.

13. The coolant pump in accordance with any one of claims 1 to 12, **characterized in that** said at least one web is formed of an elastomer synthetic material.

14. The coolant pump in accordance with any one of claims 1 to 13, **characterized in that** the structural component of electric motor and pump wheel is retained in said pump housing (2) with the aid of a plurality of webs distributed over the circumference.

15. The coolant pump in accordance with any one of claims 1 to 14, **characterized in that** said pump wheel (31) is formed of a flexible and impact resistant synthetic material, for example PEEK.

16. The coolant pump in accordance with any one of claims 4 to 15, **characterized in that** the supply conduit to said pump housing (2) which encloses said pump wheel (31) is formed of a synthetic material which is capable of embedding particles to thus prevent blocking of said pump wheel (31).

## Revendications

1. Pompe de refroidissement à entraînement électrique (1) pour le circuit d'eau de refroidissement d'un moteur à combustion interne dans un véhicule automobile,
un fluide de refroidissement liquide, en particulier à base d'eau, étant guidé le long des surfaces à refroidir dans un circuit de refroidissement fermé,
comportant un moteur électrique (4) et une roue de pompe (31) circulaire entraînée par le moteur électrique (4) destinée à introduire de l'énergie cinétique dans le fluide de refroidissement liquide, dans laquelle la roue de pompe (31) est agencée dans un carter de pompe (2) avec orifice d'admission de flux (21) et orifice d'évacuation de flux (23), et dans laquelle la roue de pompe (31) est une roue de pompe axiale,
le carter de pompe (2) étant réalisé de manière allongée et entourant du côté de l'admission la roue de pompe (31) ainsi que dans le sens de l'écoulement ensuite le moteur électrique (4),
le moteur électrique (4) étant hermétique vis-à-vis du fluide de refroidissement et étant un rotor sec,
le moteur électrique (4) tournant avec des régimes de plus de 12 000 tr/mn, et
la pompe de refroidissement (1) présentant un canal d'écoulement en grande partie annulaire pour le fluide de refroidissement,
**caractérisée en ce**
**que** le fluide de refroidissement sert également au refroidissement du moteur électrique (4),
en ce que le canal d'écoulement pour le fluide de refroidissement est agencé entre le carter de pompe (2) et la face externe du moteur électrique (4), et
en ce que le bloc fonctionnel moteur électrique/roue de pompe est maintenu dans le carter de pompe (2) dans la zone du moteur électrique (4) par l'intermédiaire d'au moins une entretoise agencée axialement sur la périphérie, à travers lequel les raccordements (6) sont également guidés pour l'activation du moteur électrique (4).

2. Pompe de refroidissement selon la revendication 1, **caractérisée en ce qu'**une unité de commande électronique (5) est contiguë au moteur électrique (4) dans le sens de l'écoulement.

3. Pompe de refroidissement selon la revendication 2, **caractérisée en ce que** l'unité de commande électronique (5) présente un élément de support en métal.

4. Pompe de refroidissement selon l'une quelconque des revendications 1 à 3, **caractérisée en ce que** le diamètre extérieur de la roue de pompe (31) correspond pour l'essentiel au diamètre intérieur d'une alimentation vers le carter de pompe (2).

5. Pompe de refroidissement selon la revendication 4, **caractérisée en ce que** la surface de la section de passage du canal d'écoulement annulaire autour du moteur électrique (4) est adaptée à la surface de la section d'écoulement de l'orifice d'admission de flux (21).

6. Pompe de refroidissement selon l'une quelconque des revendications 1 à 5, **caractérisée en ce qu'**un premier point d'appui d'un arbre (32) portant la roue de pompe (31) est agencé adjacent à la roue de pompe (31).

7. Pompe de refroidissement selon la revendication 6, **caractérisée en ce que** le premier point d'appui est conçu sous forme de palier à glissement (35).

8. Pompe de refroidissement selon la revendication 6, **caractérisée en ce que** le premier point d'appui est conçu sous forme de palier à roulement.

9. Pompe de refroidissement selon l'une quelconque des revendications 1 à 8, **caractérisée en ce qu'**un second point d'appui d'un arbre (32) portant la roue de pompe (31) est agencé au niveau du moteur électrique (4).

10. Pompe de refroidissement selon la revendication 9, **caractérisée en ce que** le second point d'appui est conçu sous forme de palier à roulement (37), en particulier sous forme de roulement à billes rainurées avec absorption de force axiale, et est hermétique vis-à-vis du fluide de refroidissement.

11. Pompe de refroidissement selon la revendication 9 ou 10, **caractérisée en ce que** le second point d'appui est hermétique vis-à-vis du fluide de refroidissement au moyen d'une bague d'étanchéité d'arbre (36).

12. Pompe de refroidissement selon la revendication 11, **caractérisée en ce que** l'arbre est conçu en deux parties et présente une goupille à aiguille résistant à la corrosion ainsi qu'une section d'arbre, dans laquelle la goupille à aiguille sert d'élément conjugué contraire pour la bague d'étanchéité d'arbre (36) et est enfoncée dans la section d'arbre, et dans laquelle la goupille à aiguille est constituée d'un matériau qui est plus dur que le matériau de la section d'arbre.

13. Pompe de refroidissement selon l'une quelconque des revendications 1 à 12, **caractérisée en ce que** l'entretoise au nombre minimum d'une est conçue à partir d'une matière plastique élastomère.

14. Pompe de refroidissement selon l'une quelconque des revendications 1 à 13, **caractérisée en ce que** le bloc fonctionnel moteur électrique/roue de pompe est maintenu dans le carter de pompe (2) par l'intermédiaire de plusieurs entretoises réparties sur la périphérie.

15. Pompe de refroidissement selon l'une quelconque des revendications 1 à 14, **caractérisée en ce que** la roue de pompe (31) est conçue à partir d'une matière plastique flexible et résiliente, par exemple du PEEK.

16. Pompe de refroidissement selon l'une quelconque des revendications 4 à 15, **caractérisée en ce que** l'alimentation vers le carter de pompe (2) entourant la roue de pompe (31) est conçue à partir d'une matière plastique, qui est en mesure d'enrober des particules et, par conséquent, d'empêcher un blocage de la roue de pompe (31).
